# EUROPEAN PATENT APPLICATION

(11) **EP 2 341 748 A2**
(43) Date of publication of application: **06.07.2011**
(21) Application number: 10197101.8
(22) Date of filing: 28.12.2010
(51) Int. Cl.: H04W 72/04, H04W 76/02

(54) **User equipment, base station, and method for frame transmission and reception**

(30) Priority: 30.12.2009 KR 20090134215
(71) Applicant: PANTECH CO., LTD., Seoul 121-270 (KR)
(72) Inventor: Cho, Hyung Soo, 121-781, Seoul (KR)
(74) Representative: Herzog, Markus

(57) **Abstract**

Provided are a user equipment, a frame transmission and reception method using a radio resource of the user equipment, and a frame transmission method using a radio resource of a base station. If an application is generated, a radio resource allocation may be requested. In response to the request, a data radio resource for a data frame and a separate control radio resource for a control frame may be allocated.

## Description

### CROSS-REFERENCE TO RELATED APPLICATION

This application claims priority from and the benefit of Korean Patent Application No. 10-2009-0134215, filed on December 30, 2009, which is hereby incorporated by reference for all purposes as if fully set forth herein.

### BACKGROUND

### 1. FIELD

Exemplary embodiments of the present invention relate to a user equipment, a method for frame transmission and reception using a radio resource of the user equipment, and a method for frame transmission using a radio resource of a base station.

### 2. DISCUSSION OF THE BACKGROUND

When upload and download are simultaneously performed using a packet protocol, such as a File-Transfer Protocol (FTP), traffic congestion may occur in a back-front of a radio interface in transmitting a data frame for the upload and a control frame for the download. Accordingly, a decrease in a data rate and a completion point in time of data transmission may not be determined.

To solve the above problem, a software algorithm may be added to an allocated radio resource. However, performance may not be accurately predicted.

### SUMMARY

Exemplary embodiments of the present invention provide a user equipment that may stably support a quality of service (QoS) for a user by enabling traffic of a data frame and traffic of a control frame to not interfere with each other, a frame transmission and reception method using a radio resource of the user equipment, and a frame transmission method using a radio resource of a base station.

Additional features of the invention will be set forth in the description which follows, and in part will be apparent from the description, or may be learned by practice of the invention.

An exemplary embodiment of the present invention discloses a frame transmission method using a radio resource of a user equipment, the method including requesting a radio resource allocation if an application is generated in the user equipment; and receiving, in response to the request, an allocation of a data radio resource for a data frame and a control radio resource for a control frame.

An exemplary embodiment of the present invention discloses a frame transmission method using a radio resource of a user equipment, the method including requesting a radio resource allocation if a plurality of applications is generated in the user equipment; receiving, in response to the request, an allocation of a plurality of data radio resources for a plurality of data frames and a single common control radio resource for a plurality of control frames; and transmitting the plurality of data frames using the plurality of data radio resources, respectively, and transmitting the plurality of control frames using the common control radio resource.

An exemplary embodiment of the present invention discloses a frame reception method using a radio resource of a user equipment, the method including receiving, in the user equipment, a plurality of data frames using a plurality of corresponding data radio resources; receiving a plurality of control frames using a single common control radio resource; decompressing compression of the received data frames and control frames; and multiplexing the plurality of decompressed data frames and control frames to provide the plurality of multiplexed data frames and control frames to respective corresponding applications.

An exemplary embodiment of the present invention discloses a frame transmission method using a radio resource of a base station, the method including receiving, in the base station, a request for a radio resource allocation; allocating, in response to the request, a data radio resource for a data frame and a control radio resource for a control frame; and transmitting the allocated data radio resource and the control radio resource.

An exemplary embodiment of the present invention discloses a frame transmission method using a radio resource of a base station, the method including receiving, in the base station, a request for a radio resource allocation with respect to a plurality of applications; allocating, in response to the request, a plurality of data radio resources for a plurality of data frames and a single common control radio resource for a plurality of control frames; and transmitting the plurality of allocated data radio resources and the common control radio resource.

An exemplary embodiment of the present invention discloses a user equipment including a first layer manager to request a radio resource allocation if an application is generated in the user equipment; and a second layer manager to receive, in response to the request, a data radio resource for a data frame and a control radio resource for a control frame, and to transmit the data frame and the control frame using the allocated data radio resource and the control radio resource, respectively.

An exemplary embodiment of the present invention discloses a user equipment including a plurality of first layer managers each to request a radio resource allocation if a plurality of applications is generated in the user equipment; and a second layer manager to receive, in response to the request, a plurality of data radio resources for a plurality of data frames and a single common control radio resource for a plurality of control frames, to transmit the plurality of data frames using the plurality of data radio resources, respectively, and to transmit the plurality of control frames using the common control radio resource.

An exemplary embodiment of the present invention discloses a user equipment including a layer manager to receive a plurality of data frames using a plurality of corresponding data radio resources, and to receive a plurality of control frames using a single common control radio resource; a decompressor to decompress compression of the data frames and the control frames; and a multiplexer to multiplex the plurality of decompressed data frames and the plurality of control frames, and to provide the plurality of multiplexed data frames and the plurality of control frames to respective corresponding applications.

An exemplary embodiment of the present invention discloses a system for frame transmission and reception, the system including a user equipment to manage an application; and a base station to allocate a radio resource to the user equipment, wherein the user equipment includes: a first layer manager to request a radio resource allocation if an application is generated in the user equipment, and a second layer manager to receive, from the base station in response to the request, a data radio resource for a data frame and a control radio resource for a control frame.

An exemplary embodiment of the present invention discloses a system for frame transmission and reception, the system including a user equipment to manage a plurality of applications; and a base station to allocate a radio resource to the user equipment, wherein the user equipment including: a plurality of first layer managers each to request a radio resource allocation if a plurality of applications is generated in the user equipment, and a second layer manager to receive, from the base station in response to the request, a plurality of data radio resources for a plurality of data frames and a single common control radio resource for a plurality of control frames.

It is to be understood that both the foregoing general description and the following detailed description are exemplary and explanatory and are intended to provide further explanation of the invention as claimed

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a diagram illustrating a user equipment and a base station for a radio resource allocation of a transmission layer according to an exemplary embodiment of the present invention.

FIG. 2 is a block diagram illustrating the user equipment or the base station of FIG. 1.

FIG. 3 is a diagram illustrating a user equipment and a base station for a radio resource allocation of a transmission layer according to an exemplary embodiment of the present invention.

FIG. 4 is a diagram illustrating a user equipment and a base station for a radio resource allocation of a transmission layer according to an exemplary embodiment of the present invention.

FIG. 5 is a block diagram illustrating the user equipment or the base station of FIG. 4.

FIG. 6 is a diagram to illustrating information for identifying a control frame and a data frame according to an exemplary embodiment of the present invention.

FIG. 7 is a block diagram illustrating a user equipment to receive a frame using a radio resource according to an exemplary embodiment of the present invention.

FIG. 8 is a flowchart illustrating a frame transmission method using a radio resource of a user equipment according to an exemplary embodiment of the present invention.

FIG. 9 is a flowchart illustrating a frame transmission method using a radio resource of a user equipment according to an exemplary embodiment of the present invention.

FIG. 10 is a flowchart illustrating a frame reception method using a radio resource of a user equipment according to an exemplary embodiment of the present invention.

FIG. 11 is a flowchart illustrating a frame transmission method using a radio resource of a base station according to an exemplary embodiment of the present invention.

FIG. 12 is a flowchart illustrating a frame transmission method using a radio resource of a base station according to an exemplary embodiment of the present invention.

FIG. 13 is a flowchart illustrating a frame transmission method using a radio resource of a base station according to an exemplary embodiment of the present invention.

### DETAILED DESCRIPTION OF THE ILLUSTRATED EMBODIMENT

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

It will be understood that when an element is referred to as being "connected to" another element, it can be directly connected to the other element, or intervening elements may be present.

When it is determined that detailed description related to a known function or configuration may make this disclosure unnecessarily ambiguous, the detailed description thereof will be omitted. Also, terms used herein are defmed to appropriately describe the exemplary embodiments of the present invention and thus may be changed depending on a user, the intent of an operator, or a custom. Accordingly, the terms are defined based on the following overall description of this specification.

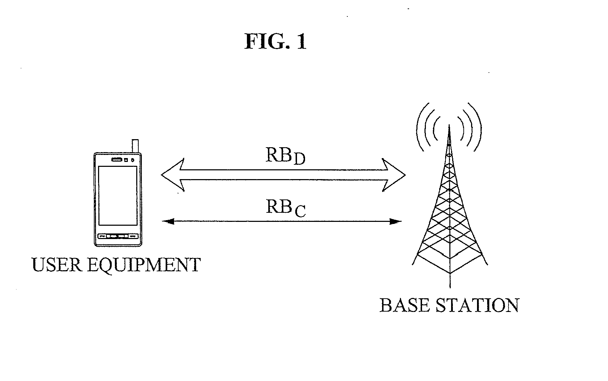

FIG. 1 is a diagram illustrating a user equipment and a base station for a radio resource allocation of a transmission layer according to an exemplary embodiment of the present invention.

The user equipment denotes a device, such as a mobile terminal, for example, a laptop, a mobile phone, a smart phone, or a computer. The base station denotes a device for communication between the user equipment and a network server. The user equipment and the base station may bi-directionally transmit user data using a packet protocol, such as a Transmission Control Protocol (TCP). The base station may be, for example, a macro base station installed in a macro cell or a small base station installed in a small cell. The small cell may include, for example, a femto cell, a pico cell, a home node B, home EnB, and the like.

The packet protocol may include a data frame and a control frame. According to an exemplary embodiment of the present invention, a separate radio resource may be allocated to each of the data frame and the control frame to transmit the data frame and the control frame. The radio resource may include, for example, a radio bearer (RB). Referring to FIG. 1, RB_{D} is allocated as a radio resource for transmission of the data frame, and RB_{C} is allocated as a radio resource for transmission of the control frame. Accordingly, the user equipment and the base station may transmit the data frame and the control frame using RB_{D} and RB_{C}, respectively. Accordingly, it is possible to prevent congestion that may occur if different types of frames are transmitted via a single radio resource. In addition, it may be possible to prevent a decrease in a transmission and reception rate, and to more accurately predict an amount of time for transmission and reception.

Hereinafter, the packet protocol, the TCP, a transmission protocol, a Packet Data Protocol (PDP) context, application data, and the like may be used together depending on ease of description, and may be translated as having equivalent meaning.

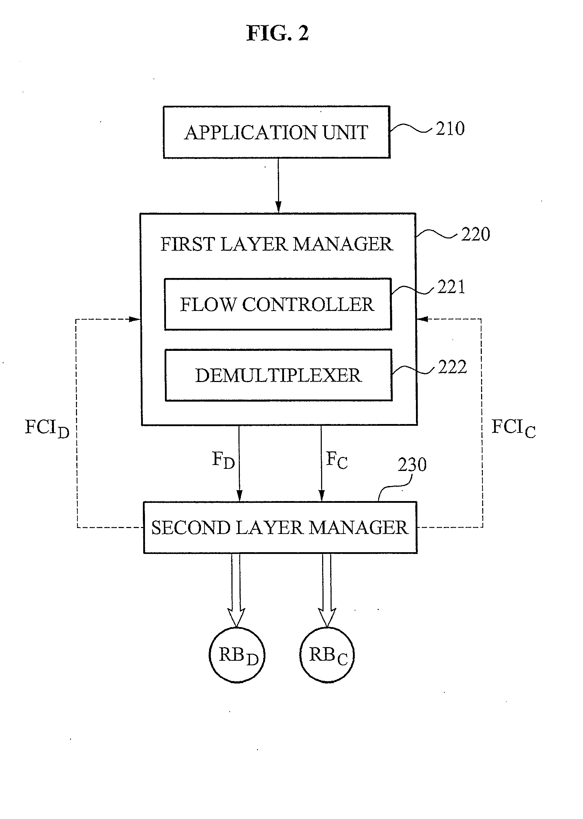

FIG. 2 is a block diagram illustrating the user equipment or the base station of FIG. 1. When FIG. 2 illustrates the user equipment, an application unit 210 may generate application data according to a user request.

If a single application is activated and the application data is generated, a single PDP context may be activated and a first layer manager 220 may request the base station for a radio resource allocation. In response to the request of the user equipment, the base station may allocate two radio resources to each single PDP context. Accordingly, the single PDP context, that is, the application data, may be classified into a data frame F_{D} and a control frame F_{C}, and the data frame F_{D} and the control frame F_{C} may be transmitted using different radio resources, respectively.

The first layer manager 220 may manage transmission and reception using a packet protocol, such as a TCP/Internet Protocol (IP), and may classify a transmission layer of the packet protocol into the data frame F_{D} and the control frame F_{C}. For example, the first layer manager 220 may be a TCP/IP module managing a TCP/IP layer. For this, the first layer manager 220 may include a flow controller 221 and a demultiplexer 223.

The flow controller 221 may operate using feedback of a lower layer. Accordingly, the flow controller 221 may verify flow control status information to verify whether the data frame F_{D} and the control frame F_{C} are transmittable.

For flow control with respect to each frame type, the flow controller 221 may verify, from flow control status information FCI_{D} and FCI_{C}, a flow control status of each of the data frame F_{D} and the control frame F_{C} fed back from a second layer manager 230. If the flow control for each frame type is set as "enable", the flow controller 221 may verify the flow control status. Accordingly, it may be possible to prevent each frame from being randomly transmitted.

If the flow control status for transmission with respect to each frame type is valid, a corresponding frame may be determined to be transmittable, and thus, the flow controller 221 may transmit the corresponding frame through the demultiplexer 223 using a physical resource.

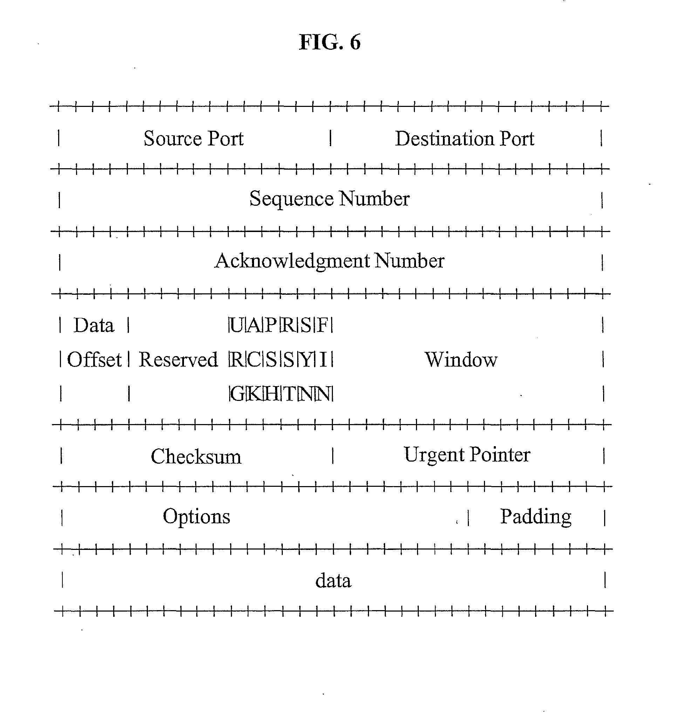

If the corresponding frame is verified to be transmittable, the demultiplexer 223 may classify, that is, demultiplex, the packet protocol into the data frame F_{D} and the control frame F_{C} in order to transmit data input from the application unit 210. The demultiplexer 223 may classify the frame type of the packet protocol into the data frame F_{D} and the control frame F_{C} by verifying header information. The demultiplexer 223 of the TCP/IP layer may determine, as a control frame F_{C}, a type of a frame designated in FIG. 6.

The flow controller 221 may output the classified data frame F_{D} and the classified control frame F_{C} to the second layer manager 230.

In response to the request of the first layer manager 220, the second layer manager 230 may receive an allocation of a data radio resource RB_{D} for the data frame F_{D} and a control radio resource RB_{C} for the control frame F_{C}. The second layer manager 230 may be, for example, a radio link control (RLC) module managing transmission and reception of data to a network. The data radio resource RB_{D} and the control radio resource RB_{C} may be allocated by the base station and be transmitted to the user equipment. The radio resource may be used in a radio link layer. The data frame F_{D} and the control frame F_{C} that are Service Data Units (SDUs) may be segmented into Protocol Data Units (PDUs), and may be transmitted to the corresponding base station.

If the data radio resource RB_{D} and the control radio resource RB_{C} are allocated, the second layer manager 230 may transmit, to the base station, the data frame F_{D} and the control frame F_{C} using the data radio resource RB_{D} and the control radio resource RB_{C}, respectively.

As described above, if each frame is verified to be transmittable, a separate radio resource may be allocated to each frame and thereby each frame may be transmitted and received. Accordingly, it is possible to transmit a corresponding frame to a corresponding link layer without affecting traffic of the data frame F_{D} and the control frame F_{C}, which may result in improving a quality of service (QoS) satisfaction of the data frame F_{D}.

The base station may receive, from the user equipment, the data frame F_{D} and the control frame F_{C} using the allocated data radio resource RB_{D} and the control radio resource RB_{C}, respectively, and may transfer the received data frame F_{D} and the control frame F_{C} to a corresponding PDP Service Access Point (SAP) to transmit to a server (not shown). Here, a SAP may denote an access point defined for each service for exchange of an upper application program and a message between layers, for example, a port.

FIG. 2 may also illustrate the base station, in which case the base station may receive a frame from an external device (not shown), such as a server, using a packet protocol. The demultiplexer 223 of the base station may demultiplex the received frame according to a type of the frame and classify the frame into an external data frame and an external control frame. The second layer manager 230 may transmit, to the user equipment, the external data frame and the external control frame using the data radio resource RB_{D} and the control radio resource RB_{C}, respectively, allocated to the user equipment. The user equipment may transfer the received external data frame and the external control frame to a SAP corresponding to a PDP context.

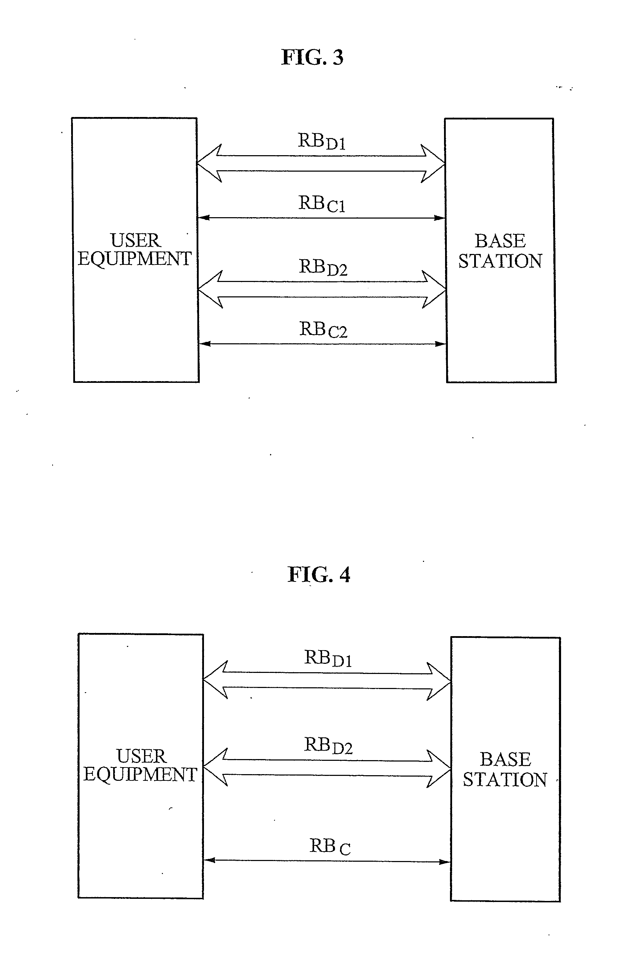

FIG. 3 is a diagram illustrating a user equipment and a base station for a radio resource allocation of a transmission layer according to an exemplary embodiment of the present invention. Referring to FIG. 3, if a plurality of applications is generated in the user equipment, a plurality of PDP contexts may be activated. The user equipment may request the base station for a radio resource allocation together with a number of generated PDP contexts. The base station may allocate, with respect to each of the applications, each one of data radio resources for a data frame and control radio resources for a control frame.

Accordingly, a first data frame F_{D1} and a first control frame F_{C1} corresponding to a first application or a first PDP context may be transmitted using a first data radio resource RB_{D1} and a first control radio resource RB_{C1}, respectively. A second data frame F_{D2} and a second control frame F_{C2} corresponding to a second application or a second PDP context may be transmitted using a second data radio resource RB_{D2} and a second control radio resource RB_{C2}, respectively. Specifically, the first control radio resource RB_{C1} and the second control radio resource RB_{C2} may be used for transmission of the control frame of the packet protocol. The control frame may be defined in a transmission protocol, such as a TCP.

FIG. 4 is a diagram illustrating a user equipment and a base station for a radio resource allocation of a transmission layer according to an exemplary embodiment of the present invention. FIG. 4 illustrates a case in which a common radio resource is used for a control frame. A control frame of each PDP context may be transmitted based on an SDU using the common radio resource. The base station may receive each control frame and transfer the each control frame to a corresponding PDP SAP.

Specifically, if a plurality of PDP contexts is activated in the user equipment, that is, if a plurality of applications is activated, and thereby the plurality of PDP contexts is generated, the base station may allocate a separate data radio resource RB_{D1} and RB_{D2} to each data frame, and may allocate a single common control radio resource RB_{C} to each control frame. Control frames of different application data may be transmitted from the user equipment to the base station or from the base station to the user equipment using the same common control radio resource RB_{C}.

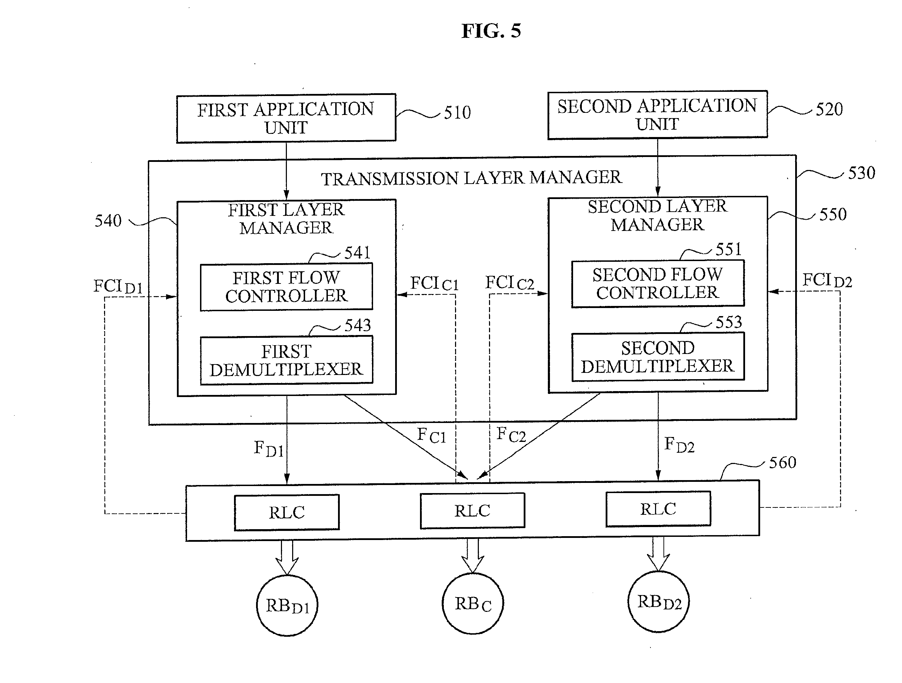

FIG. 5 is a block diagram illustrating the user equipment or the base station of FIG. 4. When FIG. 5 illustrates the user equipment, a first application unit 510 may generate first application data according to a user request, and a second application unit 520 may generate second application data.

If the first application unit 510 and the second application unit 520 are activated, two PDP contexts may be activated. A first layer manager 540 may request the base station for a radio resource allocation. One PDP context may include a first data frame F_{D1} and a first control frame F_{C1}. Another PDP context may include a second data frame F_{D2} and a second control frame F_{C2}. Accordingly, the base station may allocate a first data radio resource RB_{D1} for transmission of the first data frame F_{D1}, a second data radio resource RB_{D2} for transmission of the second data frame F_{D2}, and a common control radio resource RB_{C} for transmission of the first control frame F_{C1} and the second control frame F_{C2}.

A transmission layer manager 530 may manage transmission and reception using a packet protocol, such as a TCP/IP, and may verify header information of the packet protocol, that is, application data, to classify the packet protocol into a data frame and a control frame. The transmission layer manager 530 may transmit the data frame and the control frame using a corresponding data radio resource and a common control radio resource.

Physically or logically, the transmission layer manager 530 may be installed singularly in the user equipment, or may be installed in each application unit. The first layer manager 540 and a second layer manager 550 of FIG. 5 may be configured to be the same as the first layer manager 220 of FIG. 2, and thus, further detailed description,related thereto will be omitted here.

A first flow controller 541 may verify a flow control status of each of the first data frame F_{D1} and the first control frame F_{C1} from flow control status information FCI_{D1} and FCI_{C1}, fed back from a third layer manager 560, to verify whether the first data frame F_{D1} and/or the first control frame F_{C1} is transmittable.

If the first data frame F_{D1} or the first control frame F_{C1} is verified to be transmittable, a first demultiplexer 543 may demultiplex a packet protocol, for example, a TCP input from the first application unit 510 to classify the packet protocol into the first data frame F_{D1} and the first control frame F_{C1}.

A second flow controller 551 may verify a flow control status of each of the second data frame F_{D2} and the second control frame F_{C2} from flow control status information FCI_{D2} and FCI_{C2}, fed back from the third layer manager 560, to verify whether the second data frame F_{D2} and/or the second control frame F_{C2} is transmittable. If the second data frame F_{D2} and/or the second control frame F_{C2} is verified to be transmittable, a second demultiplexer 553 may demultiplex a packet protocol, for example, a TCP input from the second application 520, to classify the packet protocol into the second data frame F_{D2} and the second control frame F_{C2}.

The first flow controller 541 and second flow controller 551 may output, to the third layer manager 560, the first and the second frames F_{D1} and F_{D2} and the first and the second control frames F_{C1} and F_{C2} classified by the respective first demultiplexer 543 and second demultiplexer 553.

The third layer manager 560 may transmit the first data frame F_{D1} to the base station using the first data radio resource RB_{D1} for transmission of the first data frame F_{D1}, and may transmit the second data frame F_{D2} to the base station using the second data radio resource RB_{D2} for transmission of the second data frame F_{D2}. Also, the third layer manager 560 may transmit the first control frame F_{C1} and the second control frame F_{C2} to the base station using the allocated common control radio resource RB_{C}. The third layer manager 560 may include an RLC module or multiple RLC modules configured to support transmission and reception of data according to a radio resource.

The base station may transfer, to corresponding PDP SAPs, the first data frame F_{D1} and the second data frame F_{D2} that are received from the user equipment using the first data radio resource RB_{D1} and the second data radio resource RB_{D2}. Also, the base station may generate an SDU by collecting PDUs of the first control frame F_{C1} and the second control frame F_{C2} received using the common control radio resource RB_{C}, and may transfer the SDU to a corresponding PDP SAP.

The user equipment or the base station may identify a corresponding PDP SAP according to one of the following two methods. First, a reception side, for example, the base station, may verify ID information, for example, an IP address, of a transmission side, for example, the user equipment, and may transfer an SDU to a PDP SAP corresponding to the verified IP address.

Second, the transmission side, for example, the user equipment, may transmit radio resource information, for example, RB information, of a data frame to the reception side, for example, the base station, by including the radio resource information in a PDU, and thereby, the reception side, for example, the base station, may identify an SDU based on the radio resource information. The base station may transfer the SDU to a corresponding PDP SAP.

When FIG. 5 illustrates the base station, the base station of FIG. 5 may be configured to be the same as the base station of FIG. 2. Specifically, the base station may classify, into an external data frame and an external control frame, a packet protocol received from a server (not shown) by demultiplexing the packet protocol according to a frame type. The base station may transmit the external data frame and the external control frame to the user equipment using a data radio resource and a control radio resource allocated to the user equipment. The user equipment may transfer the received external data frame and external control frame to an SAP corresponding to a PDP context.

FIG. 6 is a diagram to illustrating information for identifying a control frame and a data frame according to an exemplary embodiment of the present invention. In a TCP/IP layer, a demultiplexer, for example, the demultiplexer 223, the first demultiplexer 543, or the second demultiplexer 553, may classify frames of a type into control frames as shown in FIG. 6. Information used to classify the frames may use a frame format defined in a Request for Comments (RFC) document published by the Internet Engineering Task Force (IETF), for example, RFC 1180, which is incorporated herein by reference. In FIG. 6, a control bit used for classification of a control frame may be indicated as maximum six bits. Types of the control frame may include an Urgent Pointer field significant (URG) frame, an Acknowledgement field significant (ACK) frame, a Push Function (PSH) frame, a Reset the connection (RST) frame, a Synchronize sequence numbers (SYN) frame, and a No more data from sender (FIN) frame.

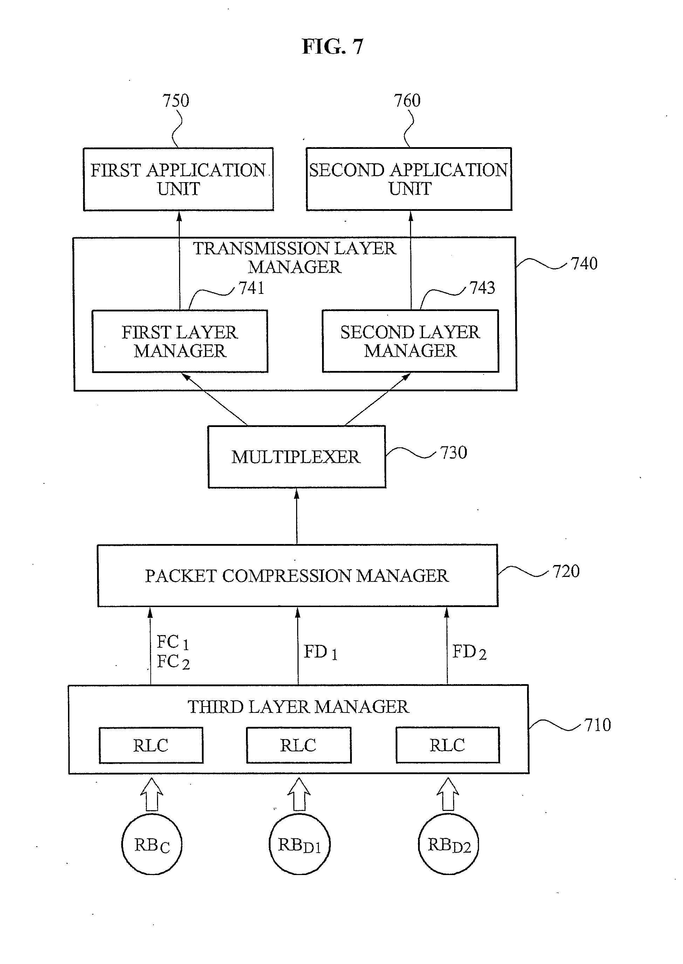

FIG. 7 is a block diagram illustrating a user equipment to receive a frame using a radio resource according to an exemplary embodiment of the present invention. A case in which a user equipment including a first application unit 750 and a second application unit 760 using different IP addresses multiplexes received frames will be described with reference to FIG. 7.

A third layer manager 710 may receive a plurality of data frames using a plurality of data radio resources corresponding to the plurality of data frames, and may receive a plurality of control frames using a single common control radio resource or a plurality of control radio resources. For example, the third layer manager 710 may receive a first data frame F_{D1} using a first data radio resource RB_{D1}, receive a second data frame F_{D2} using a second data radio resource RB_{D2}, and receive a first control frame F_{C1} and a second control frame F_{C2} using a common control radio resource RB_{C}.

The third layer manager 710 may transfer, to a packet compression manager 720, the first data frame F_{D1}, the second data frame F_{D2}, the first control frame F_{C1}, and the second control frame F_{C2}. The third layer manager 710 may be one or more RLC modules configured to support transmission and reception of data according to a radio resource.

The packet compression manager 720 may decompress compression of the first data frame F_{D1}, the second data frame F_{D2}, the first control frame F_{C1}, and the second control frame F_{C2}. The packet compression manager 720 may be, for example, a Packet Data Convergence Protocol (PDCP) module configured to compress an Internet protocol or to decompress compression of a received frame.

A multiplexer 730 may multiplex the decompressed first data frame F_{D1}, the second data frame F_{D2}, the first control frame F_{C1}, and the second control frame F_{C2} that are input from the packet compression manager 720, and then transfer, to a transmission layer manager 740, the multiplexed first data frame F_{D1}, the second data frame F_{D2}, the first control frame F_{C1}, and the second control frame F_{C2}. The transmission layer manager 740 may be a module managing transmission according to a TCP/IP, and thus, may include a first layer manager 741 for a first application and a second layer manager 743 for a second application. The multiplexer 730 may verify an IP address of each control frame and then transfer each control frame to the first layer manager 741 or the second layer manager 743 using an SAP corresponding to multiplexed data.

The first layer manager 741 may provide, to the corresponding first application unit 750, the first data frame F_{D1} and the first control frame F_{C1} transferred from the multiplexer 730. The second layer manager 743 may provide, to the corresponding second application unit 760, the second data frame F_{D2} and the second control frame F_{C2} transferred from the multiplexer 730.

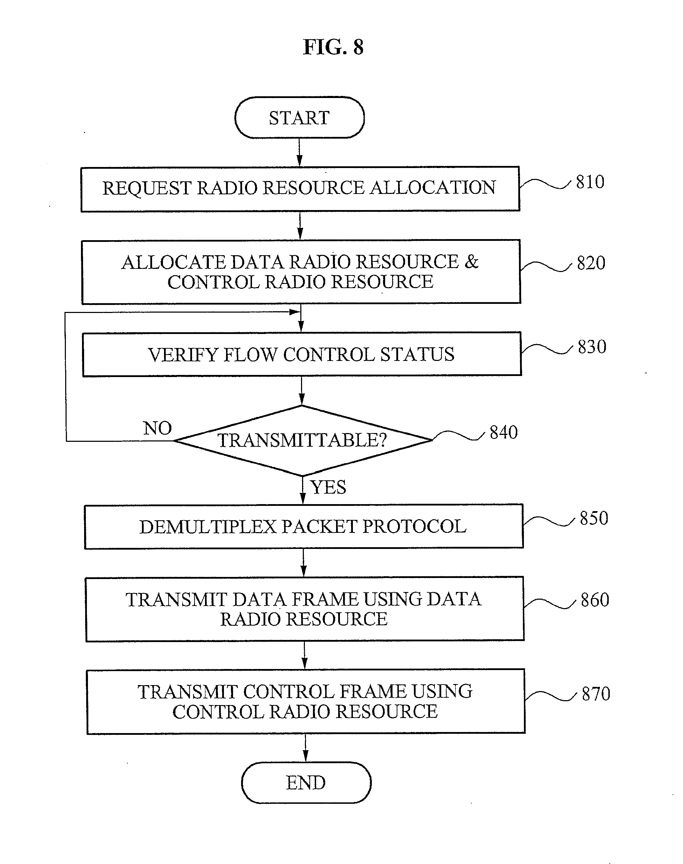

FIG. 8 is a flowchart illustrating a frame transmission method using a radio resource of a user equipment according to an exemplary embodiment of the present invention. Referring to FIG. 2 and FIG. 8, in operation 810, if an application of the application unit 210 is activated, and thereby, application data is generated, the first layer manager 220 may request a base station for a radio resource allocation. In operation 820, the base station may allocate a data radio resource and a control radio resource with respect to a single application in response to the request of the user equipment.

The flow controller 221 may verify a flow control status of each frame, fed back from the second layer manager 230 for flow control with respect to each frame type in operation 830, and may verify whether a data frame or a control frame is transmittable in operation 840.

If the data frame and/or the control frame is verified to be transmittable in operation 840, the demultiplexer 222 may demultiplex a packet protocol input from the application unit 210 in order to classify the packet protocol into the data frame and the control frame in operation 850.

In operations 860 and 870, the second layer manager 230 may transmit the data frame and the control frame to the base station using a data radio resource and a control radio resource, respectively.

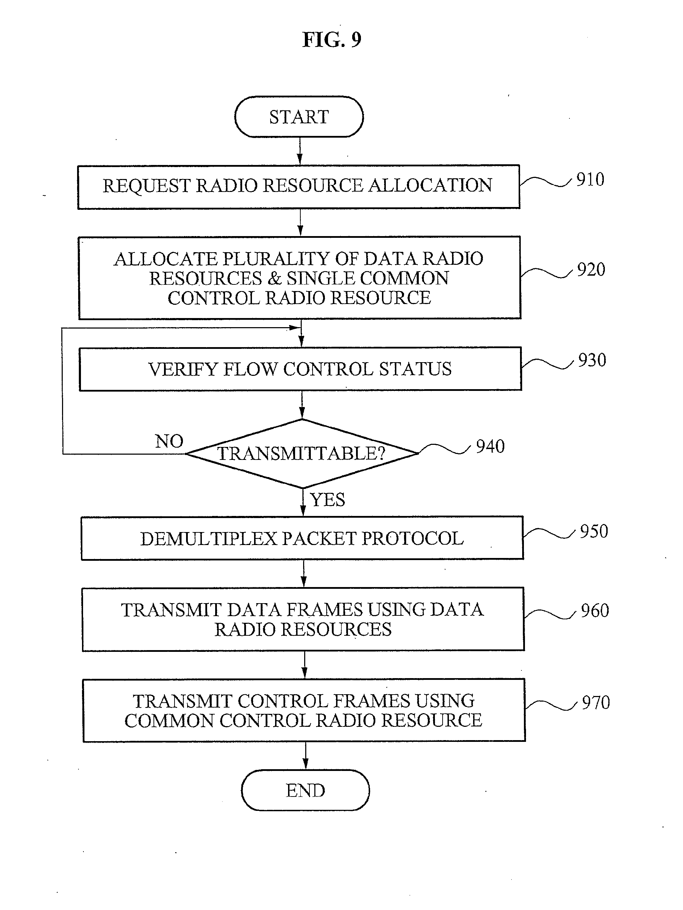

FIG. 9 is a flowchart illustrating a frame transmission method using a radio resource of a user equipment according to an exemplary embodiment of the present invention. Referring to FIG. 5 and FIG. 9, in operation 910, if the first application unit 510 and the second application unit 520 are activated, and thereby, a plurality of application data is generated, the transmission layer manager 530 may request a base station for a radio resource allocation.

In operation 920, the base station may allocate data radio resources with respect to each application and a single common control radio resource in response to the request of the user equipment.

The transmission layer manager 530 may verify a flow control status of each frame, fed back from the third layer manager 560 for flow control with respect to each frame type in operation 930, and may verify whether each frame is transmittable in operation 940.

If each frame is verified to be transmittable in operation 940, the transmission layer manager 530 may demultiplex an input protocol input from the first application unit 510 and the second application unit 520 in order to classify the input protocol into data frames and control frames in operation 950.

In operation 960, the third layer manager 560 may transmit the classified data frames to the base station using the corresponding different data radio resources. In operation 970, the third layer manager 560 may simultaneously or non-simultaneously transmit the classified control frames to the base station using a single common control radio resource.

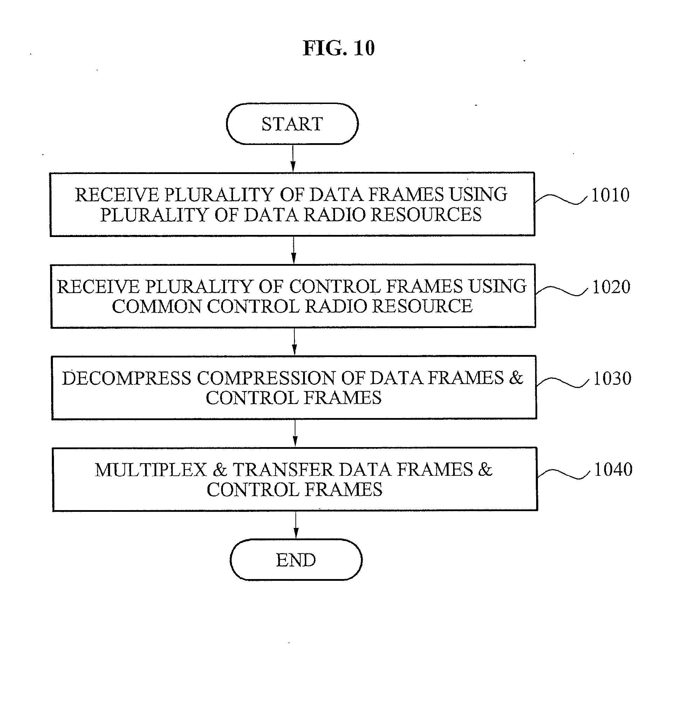

FIG. 10 is a flowchart illustrating a frame reception method using a radio resource of a user equipment according to an exemplary embodiment of the present invention. With reference to FIG. 7 and FIG. 10, in operation 1010, the third layer manager 710 may receive a plurality of data frames using respective data radio resources allocated to the plurality of data frames. In operation 1020, the third layer manager 710 may receive a plurality of control frames using a single common control radio resource. In operation 1030, the packet compression manager 720 may decompress compression of the received data frames and the control frames.

In operation 1040, the multiplexer 730 may multiplex the decompressed data frames and control frames, and transfer the demultiplexed data frames and control frames to corresponding applications. Specifically, the multiplexer 730 may verify an IP address of each of the control frames or the data frames, and transfer the control frames or the data frames to the first layer manager 741 or the second layer manager 743 using an SAP corresponding to multiplexed data to be transferred to a corresponding application unit. For example, the multiplexer 730 may provide, to the first application unit 750, a first data frame and a first control frame.

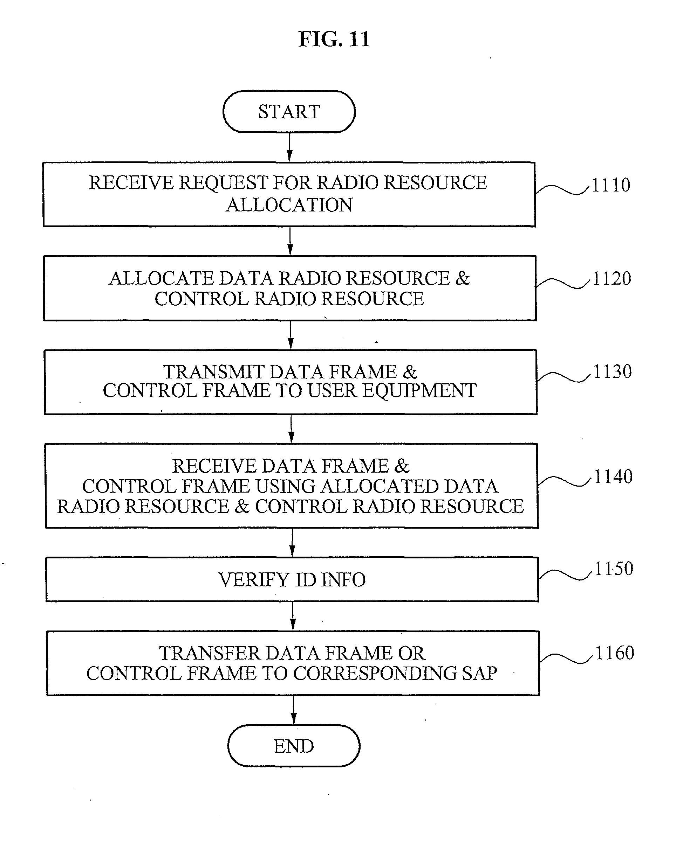

FIG. 11 is a flowchart illustrating a frame transmission method using a radio resource of a base station according to an exemplary embodiment of the present invention. In operation 1110, the base station may receive, from a user equipment, a request for radio resource allocation.

In operation 1120, the base station may allocate, to the user equipment, a data radio resource for a data frame and a control radio resource for a control frame. In operation 1130, the base station may transmit the data frame and the control frame to the user equipment. In operation 1140, the base station may receive the data frame and the control frame using the allocated data radio resource and control radio resource, respectively. In operation 1150, the base station may verify ID information, for example, an IP address, of the received data frame or the control frame. In operation 1160, the base station may transfer the data frame and/or the control frame to an SAP corresponding to the verified IP address to be transmitted to a corresponding server.

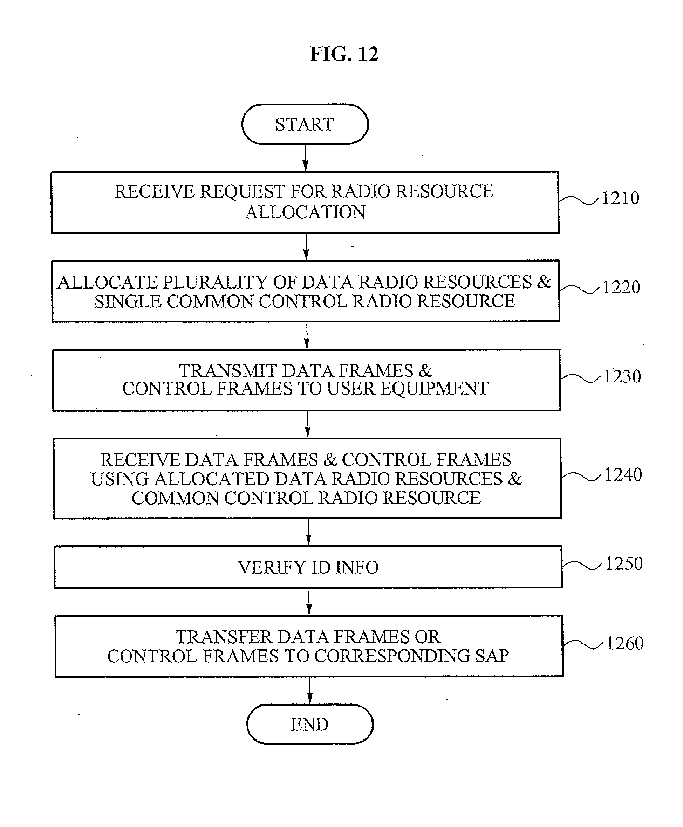

FIG. 12 is a flowchart illustrating a frame transmission method using a radio resource of a base station according to an exemplary embodiment of the present invention. In operation 1210, the base station may receive, from a user equipment, a request for a radio resource allocation with respect to a plurality of applications.

In operation 1220, the base station may allocate, to the user equipment, a plurality of data radio resources for a plurality of data frames and a single common control radio resource for a plurality of control frames. In operation 1230, the base station may transmit the plurality of data frames and the plurality of control frames to the user equipment.

In operation 1240, the base station may receive the data frame and the control frame using the allocated data radio resource and control radio resource, respectively. In operation 1250, the base station may verify ID information, for example, an IP address, of the received data frame or the control frame. In operation 1260, the base station may transfer the data frame and/or the control frame to an SAP corresponding to the verified IP address to be transmitted to a corresponding server.

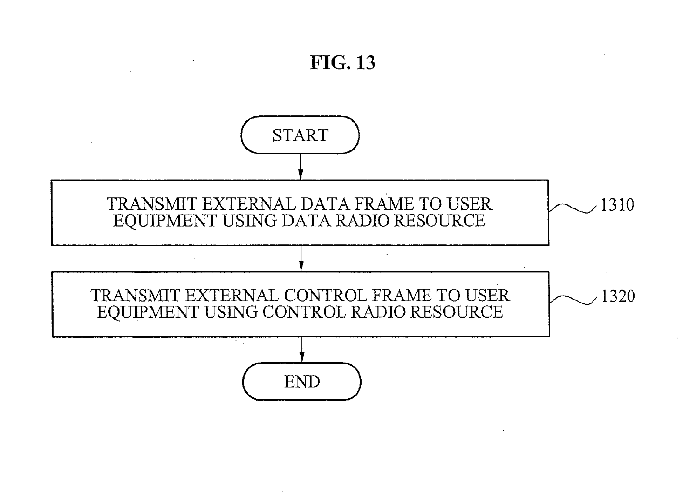

FIG. 13 is a flowchart illustrating a frame transmission method using a radio resource of a base station according to an exemplary embodiment of the present invention. In operation 1310, the base station may transmit, to a user equipment, an external data frame transmitted from a server using a data radio resource allocated to the user equipment. In operation 1320, the base station may transmit, to the user equipment, an external control frame transmitted from the server using a control radio resource allocated to the user equipment.

According to embodiments of the present invention, transmission and reception of a data frame may not be delayed due to delay of a control frame. Accordingly, it may be possible to provide a user with a consistent and enhanced QoS.

Also, according to embodiments of the present invention, a data frame and a control frame may be transmitted and received using respective corresponding radio resources. Accordingly, it may be possible to increase a transmission and reception rate, and to provide a plurality of users with a communication service.

The exemplary embodiments according to the present invention may be recorded in computer-readable media including program instructions to implement various operations embodied by a computer. The media may also include, alone or in combination with the program instructions, data files, data structures, and the like. The media and program instructions may be those specially designed and constructed for the purposes of the present invention, or they may be of the kind well-known and available to those having skill in the computer software arts. Examples of computer-readable media include magnetic media such as hard disks, floppy disks, and magnetic tape; optical media such as CD ROM disks and DVD; magneto-optical media such as floptical disks; and hardware devices that are specially configured to store and perform program instructions, such as read-only memory (ROM), random access memory (RAM), flash memory, and the like, and combinations thereof. Examples of program instructions include both machine code, such as produced by a compiler, and files containing higher level code that may be executed by the computer using an interpreter. The described hardware devices may be configured to act as one or more software modules in order to perform the operations of the above-described embodiments of the present invention.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.
Provided are a user equipment, a frame transmission and reception method using a radio resource of the user equipment, and a frame transmission method using a radio resource of a base station. If an application is generated, a radio resource allocation may be requested. In response to the request, a data radio resource for a data frame and a separate control radio resource for a control frame may be allocated.

## Claims

1. A frame transmission method using a radio resource of a user equipment, the method comprising:
requesting a radio resource allocation if at least one application is generated in the user equipment; and
receiving, in response to the request, an allocation of at least one data radio resource for at least one data frame and a control radio resource for at least one control frame.

2. The method of claim 1, further comprising:
transmitting the at least one data frame using the at least one allocated data radio resource; and
transmitting the at least one control frame using the at least one allocated control radio resource, and
wherein, preferably, the transmitting of the at least one data frame comprises transmitting identification information of the at least one allocated data radio resource with the at least one data frame.

3. The method of claim 1 or 2, further comprising:
verifying flow control status information to verify whether the at least one data frame and the at least one control frame are transmittable; and
verifying header information of a packet to demultiplex the packet to the at least one data frame and the at least one control frame if the at least one data frame and the at least one control frame are transmittable.

4. The method of any of claims 1 to 3, wherein the at least one data radio resource and the control radio resource are allocated at a base station.

5. The method of any of claims 1 to 4, further comprising:
receiving at least one external data frame and at least one external control frame using the at least one allocated data radio resource and the control radio resource, respectively.

6. The method of any of claims 1 to 5, the method comprising:
requesting a radio resource allocation if a plurality of applications is generated in the user equipment;
receiving, in response to the request, an allocation of a plurality of data radio resources for a plurality of data frames and a single common control radio resource for a plurality of control frames; and
transmitting the plurality of data frames using the plurality of data radio resources, respectively, and transmitting the plurality of control frames using the common control radio resource.

7. A frame reception method using a radio resource of a user equipment, the method comprising:
receiving, in the user equipment, a plurality of data frames using a plurality of corresponding data radio resources;
receiving a plurality of control frames using a single common control radio resource;
decompressing compression of the received data frames and control frames; and
multiplexing the plurality of decompressed data frames and control frames to provide the plurality of multiplexed data frames and control frames to respective corresponding applications.

8. A frame transmission method using a radio resource of a base station, the method comprising:
receiving, in the base station, a request for a radio resource allocation;
allocating, in response to the request, at least one data radio resource for at least one data frame and a control radio resource for at least one control frame; and
transmitting the at least one allocated data radio resource and the control radio resource.

9. The method of claim 8, further comprising:
receiving, in the base station, the at least one data frame and the control frame using the at least one allocated data radio resource and the control radio resource, respectively.

10. The method of claim 8 or 9, further comprising:
transmitting at least one external data frame and at least one external control frame using the at least one allocated data radio resource and the control radio resource, respectively.

11. The method of any of claims 8 to 10, the method comprising:
receiving, in the base station, a request for a radio resource allocation with respect to a plurality of applications;
allocating, in response to the request, a plurality of data radio resources for a plurality of data frames and a single common control radio resource for a plurality of control frames; and
transmitting the plurality of allocated data radio resources and the common control radio resource.

12. A user equipment, comprising:
at least one first layer manager to request a respective radio resource allocation if at least one application is generated in the user equipment; and
a second layer manager to receive, in response to the request, at least one data radio resource for at least one data frame and a control radio resource for at least one control frame, and to transmit the at least one data frame and the at least one control frame using the at least one allocated data radio resource and the control radio resource, respectively.

13. The user equipment of claim 12, comprising:
a plurality of first layer managers each to request a radio resource allocation if a plurality of applications is generated in the user equipment; and
a second layer manager to receive, in response to the request, a plurality of data radio resources for a plurality of data frames and a single common control radio resource for a plurality of control frames, to transmit the plurality of data frames using the plurality of data radio resources, respectively, and to transmit the plurality of control frames using the common control radio resource.

14. A user equipment, comprising:
a layer manager to receive a plurality of data frames using a plurality of corresponding data radio resources, and to receive a plurality of control frames using a single common control radio resource;
a decompressor to decompress compression of the data frames and the control frames; and
a multiplexer to multiplex the plurality of decompressed data frames and the plurality of control frames, and to provide the plurality of multiplexed data frames and the plurality of control frames to respective corresponding applications.

15. A system for frame transmission and reception, the system comprising:
a user equipment to manage at least one application; and
a base station to allocate a radio resource to the user equipment,
wherein the user equipment comprises:
at least one first layer manager to request a respective radio resource allocation if at least one application is generated in the user equipment, and
a second layer manager to receive, from the base station in response to the request, at least one data radio resource for at least one data frame and a control radio resource for at least one control frame.

16. The system for frame transmission and reception of claims 15, the system comprising:
a user equipment to manage a plurality of applications; and
a base station to allocate a radio resource to the user equipment,
wherein the user equipment comprises:
a plurality of first layer managers each to request a radio resource allocation if a plurality of applications is generated in the user equipment, and
a second layer manager to receive, from the base station in response to the request, a plurality of data radio resources for a plurality of data frames and a single common control radio resource for a plurality of control frames.
